(19) **Europäisches Patentamt**

**European Patent Office**

**Office européen des brevets**

(11) **EP 1 692 946 A1**

(12) **EUROPEAN PATENT APPLICATION**

(43) Date of publication:
**23.08.2006 Bulletin 2006/34**

(51) Int Cl.:
***A23K 1/00*** (2006.01)   ***A23K 1/18*** (2006.01)
***A23J 3/14*** (2006.01)

(21) Application number: **06250868.4**

(22) Date of filing: **17.02.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **18.02.2005 US 60943**

(71) Applicant: **MARS, INCORPORATED**
**McLean, Virginia 22101-3883 (US)**

(72) Inventors:
• **Unlu, Emine**
  **Pasadena, CA 91106 (US)**
• **Ortiz, Oscar**
  **Hawthorne, CA 90250 (US)**

• **Sarkar, Arnab**
  **Fountain Valley, CA 92708 (US)**
• **Torney, Allan A.**
  **Brampton, ON, L6X 2A9 (CA)**
• **Mooney, Liisa**
  **Toronto, ON, M6P 3C7 (CA)**
• **Zubair, Kasim A.**
  **Brampton, ON, L6R 3C3 (CA)**
• **Ruffa, Dino**
  **Mississuga, ON, L4Z 3T5 (CA)**
• **Shields, Frank**
  **La Verne, CA 91750 (US)**

(74) Representative: **Cornish, Kristina Victoria Joy et al**
**Kilburn & Strode,**
**20 Red Lion Street**
**London WC1R 4PJ (GB)**

(54) **Edible pet chew**

(57)     The present invention relates to a product and a method of making a pet chew that is edible and highly digestible. The pet chew comprises 5 to about 50 % (w/w) protein, about 20 to about 80 % (w/w) carbohydrate, about 5 to about 50 % (w/w) humectant, and about 5 to about 30 % (w/w) water. When formed, the pet chew comprises a hardness measurement of about 5 kg to about 60 kg and an elasticity measurement of about 3 mm to about 40 mm.

EP 1 692 946 A1

## Description

### TECHNICAL FIELD

The present invention relates to an edible and highly digestible pet chew. More particularly, the edible and highly digestible pet chew is long lasting.

### BACKGROUND OF THE INVENTION

Most dogs enjoy chewing, and owners are therefore often provide suitable chewing products for their animals. Some chewing products are made from materials such as plastics, which are essentially inedible (although dogs may sometimes swallow them) and are indigestible. Such chewing products lack nutritional value and are tasteless and unpalatable to many dogs. Rawhide chews are also commonly available. However, such chews are similarly indigestible and have low palatability. In addition to these chews not being highly digestible, they can result in stresses in the digestive system or other serious problems, such as choking. For example, excessive hardness of a chew may cause slab fractures to the teeth due to excessive forces applied when the dog tries to bite through the product, while sharp pieces may cause damage to the soft tissues such as bleeding of gums. Another disadvantage to such chews is that soggy, partially chewed products can create an environment for harmful bacterial growth.

There is therefore a desire amongst dog owners for pet chews that are fully edible. There exist several products which, to this end, are made predominantly from food ingredients. US 5,827,565 and US 6,086,940 relate to dog chews which are made predominantly of starch and which have the additional property that their texture can be easily heat modified, for example, by being subjected to microwave radiation. Such chews suffer the disadvantage that they are either too hard or too soft. In the case of hard chews, young dogs with insufficiently developed teeth or old dogs with decayed or missing teeth might be unable to chew on the product at all. Soft chews are a problem because they are eaten very quickly by the dog and are not chewed for a sufficient amount of time. Owners are often left dissatisfied if their dog rapidly chews the product they have purchased, often at a significant cost, rather than enjoying the chew for a longer time.

Each of the aforementioned references describe a pet product which, whilst achieving various aims, fails to provide a pet chew which is edible and highly digestible.

### BRIEF SUMMARY OF THE INVENTION

The present invention is directed to an edible pet chew which comprises a combination of protein, carbohydrate, fat, humectants and water which used to form into a chew having a hardness measurement of about 5 kg to about 60 kg and elasticity measurement of about 3 mm to about 40 mm. The pet chew may also have a toughness measurement of about 200 kg*mm to about 900 kg*mm. The pet chew can be formed using any conventional method, for example, extrusion or injection molding

In certain embodiments, the pet chew is molded into the shape of an hourglass or a flared-like bone. The pet chew comprises about 5 to about 50 % (w/w) protein, about 20 to about 80 % (w/w) carbohydrate, about 5 to about 50 % (w/w) humectant, and about 5 to about 30 % (w/w) water. Yet further, in certain embodiments, the pet chew is nutritionally complete.

The amount of water in the pet chew may compromise about 5 to about 30%, more preferably 10 to about 25 % and even more preferably about 5 to about 20%. More particularly, the water activity is of about 0.50 to about 0.85, more preferably, 0.60 to about 0.80, and even more preferably 0.60 to about 0.75.

In certain embodiments, the amount of protein in the pet chew comprises about 5 to about 50 % (w/w), preferably, about 10 to about 45%, more preferably, about 5% to about 35%, and even more preferably, about 10 to about 35%. The protein can be any protein derived from plants and animals, which includes fungi. Exemplary proteins include, but are not limited to wheat gluten, corn zein, corn gluten, sunflower protein, legume protein, soy protein, pea protein, peanut protein, rapeseed-protein, nut protein (e.g., hazelnut, almond, pistachio protein), milk protein (e.g., casein or whey protein), collagen, gelatin, keratin, egg albumin, mycoprotein or combinations thereof.

In further embodiments, the protein comprises milk protein, for example a casein protein (e.g., sodium caseinate, calcium caseinate, potassium caseinate) or a whey protein in an amount of about 1 to about 30%, preferably, about 3 to about 25%, more preferably 5 to about 20%.

Still further, the protein component may comprise about 1 to about 30% (w/w), preferably, about 3 to about 25% (w/w), and more preferably about 5 to about 20% of a protein that is rich in prolamines, for example, but not limited to wheat gluten, corn zein or soy protein.

In further embodiments, the total protein component of the pet chew comprises a casein or whey protein and a protein that is rich in prolamines.

Still further, the carbohydrate may comprise a starch in the amount of about 20% to about 80%, preferably, about 25 to about 70% and more preferably about 30 to about 65%. Example starches include, but are not limited to tapioca, sorghum, potato, sweet potato, wheat, rice, corn, rye, barley, or corn starch.

The carbohydrate may also comprise a flour. Exemplary flours include, but are not limited to rice flour, wheat flour, tapioca flour, potato flour, oat flour, corn flour, barley flour, soy flour or lentil flour.

In further embodiments, the amount of a humectant is about 5 to about 50%, preferably, about 10 to about 45% (w/w) more preferably and 15 to about 35% (w/w). Exemplary humectants include, but are not limited to sucrose, sodium chloride, sorbitol, glycerine, starch hydrolysate, glucose, starch, maltose, lactose, gums, galactose, citric acid, alanine, glycine, high fructose corn syrup, tartaric acid, malic acid, xylose, PEG 400, PEG 600, propylene glycol, aminobutyric acid, mannitol, mannose, or lactulose. More particularly, the humectant is a combination of sugar, salt, propylene glycol, glycerin, and hydrogenated starch hydrolysate. Yet further, the amount of propylene glycol is less than about 10%, more preferably is less than about 4%, and even more preferably is less than about 3%.

Still further, the pet chew may also comprise a dietary fiber in the range of about 0.5 to about 15% (w/w). Exemplary dietary fiber sources include, but are not limited to cell wall polysaccharides (cellulose, hemicelluloses, pectins) and non-cell wall polysaccharides (guar, locust bean gums, gum arabic, gum karaya, tragacanth gums, agar, alginates and carrageenan).

In further embodiments, the pet chew comprises preferably a degree of gelatinization greater than about 30% on total starch basis. The degree of gelatinization of the starch affects the texture, lasting time and digestibility of the chew. In further embodiments, the degree of gelatinization can be in the range of about 30% to about 100% degree of starch gelatinization, more preferably about 45 to about 100% and even more preferably about 70 to about 100%.

In further embodiments, the pet chew comprises at least one layer. The pet chew can be a mono-component or single component pet chew or it can comprise more than one layer, for example 2 layers, 3 layers, 4 layers, etc. More preferably, the pet chew is a dual component or two layers in which the relative weight ratios of the two layers are about 5:95% to about 95:5%, more preferably, about 35-40:65-60%.

More specifically, the protein component of the first layer comprises about 20 to about 80% (w/w) of a protein rich in prolamines and about 20 to about 80% (w/w) of a milk protein. The protein component of the second layer comprises about 20 to about 80 % (w/w) of a protein rich in prolamines and about 20 to about 80% (w/w) of a milk protein.

Still further, pet chew may further comprise an outer coating, wherein the outer coating comprises a solution of water, alcohol *(e.g.,* ethanol) and corn zein. A colorant and a natural and/or a artificial flavor may also be added to the outer coating. The outer coating may comprise about 0.2 to about 1.0% (w/w) of the pet chew.

In certain embodiments, the pet chew comprises a density of about 0.9 to about 1.5 g/cm$^3$, preferably, about 1.2 to about 1.4 g/cm$^3$.

Further embodiments of the present invention comprises various total weights of pet chews for example, but not limited to a total weight of about 125 g to about 160 g, more preferably, 130g, and a total weight of about 330 g to about 350 g, preferably, 340 g. The size and shape of the inventive product are also a benefit to a dog's eating enjoyment as it allows the dog to be able to hold the inventive product with its paws or appendages while eating it. It is clear that a combination of elements including size, length, cross sectional area, shape, and texture are key attributes in improving the interaction between the owner and animal.

The pet chew of the present invention is such that the size of the pet chew is large enough to provide a substantial mass for a given weight of an animal. Thus, in certain embodiments, the weight ratios for the pet chew (g pet chew/kg of animal) are about 1 g/kg to about 40 g/kg, preferably, about 2.5 g/kg to about 30 g/kg, and more preferably, about 4.5 g/kg to about 20 g/kg.

In certain embodiments, the pet chew of the present invention comprises an overall digestibility of greater than 70%, preferably greater than 85%, most preferably greater than 90%. More particularly, the digestibility of the macronutrients are as follows the protein component comprises a digestibility of about 88 to about 95%, and the fat component comprises a digestibility of about 89 to about 96%.

In still yet a further embodiment, the pet chew is consumed in not less than 4 minutes by the pet.

Another embodiment of the present invention comprises an edible coating layer comprising about 10 to about 21 % (w/w) of corn zein, about 10 to about 70% (w/w) water and about 20 to 80% (w/w) alcohol *(e.g.,* ethanol). In addition, the coating may comprise about 0.05 to about 5% (w/w) food colorant, and about 0.5 to about 10% (w/w) of natural or artificial flavor. The food colorant may be any approved color including but not limited to iron oxide or caramel color. The flavor may include but is not limited to beef, chicken, turkey, chicken liver, pork, bacon, turkey liver, shrimp, crab, or fish.

Another embodiment comprises a process of manufacturing a dual layer pet chew. For example, a first dry mixture comprising at least about 15% to about 35% (w/w) protein, about 10 to about 55 % (w/w) starch is mixed. Next, the first dry mixture is added to about 5 to about 35% (w/w) humectant and about 5 to about 30% (w/w) water to form a first component. A second dry mixture comprising at least about 15 to about 35% (w/w) protein and about 10% to about 55% (w/w) starch is mixed. Then, the second dry mixture is added to about 5 to about 35% (w/w) humectant, and about 5 to about 30% (w/w) water to for a second component. Then, the first composition is co-extruded within the second component to form a dual component extrudate. Next, a three dimensional shape is formed having dual components. The co-extruding step comprises a heating and alternative may comprise cooling process to form a gelatinized and textured dual component extrudate. The co-extruding step produces a composite rope type extrudate. The cooling process may be removed if there is a longer time profile used during the heating or cooking step.

The forming step may utilize atmospheric conditions and uses a rotary molder having at least two wheels whereby the wheels have the contour volume of the pet chew machined into them. One or more of the wheels may comprise a graphic to stamp any portion of the pet chew. Alternatively, pressure may be utilized in further molding embodiments, for example, injection molding.

The extrusion pressure for the extruder used for the first component is about 80psi to about 250psi The extrusion pressure for the extruder used for the second component is about 320psi to 525psi.

In an alternative embodiment, the process further comprises a deflashing step which comprises removing the excess material formed during the forming step. After the deflashing step, the process further may comprise a coating step which may comprise applying a coat solution to the pet chew upon exiting the de-flasher. Applying may comprise spraying, enrobing, brushing, electrostatic coating, vapor deposition, surface printing, surface painting or atomizing.

The coat solution hides stretch marks produced during the forming and deflashing steps of the pet chew. The coat solution may produce a shiny and smooth appearance to the pet chew. The temperature of the product at the coating stage is about 20-120 Celsius. Such product temperature causes evaporation of the coat solution resulting in a product surface drying time of about 10-60 seconds.

In further embodiments, the pet chew is cut into desired sizes by a saw, guillotine, ultrasonic cutter, water jet cutting or combinations thereof.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated by those skilled in the art that the conception and specific embodiment disclosed may be readily utilized as a basis for modifying or designing other structures for carrying out the same purposes of the present invention. It should also be realized by those skilled in the art that such equivalent constructions do not depart from the spirit and scope of the invention as set forth in the appended claims: The novel features which are believed to be characteristic of the invention, both as to its organization and method of operation, together with further objects and advantages will be better understood from the following description when considered in connection with the accompanying figures. It is to be expressly understood, however that each of the figures is provided for the purpose of illustration and description only and is not intended as a definition of the limits of the present invention.

## BRIEF DESCRIPTION OF THE DRAWINGS

For a more complete understanding of the present invention, reference is now made to the following descriptions taken in conjunction with the accompanying drawing, in which:

FIG. 1 is a cross sectional view of a preferred embodiment;

FIG. 2 illustrates a longitudinal view of a preferred embodiment;

FIG. 3 illustrates another longitudinal view of an embodiment;

FIG. 4 illustrates still another longitudinal view of an embodiment;

FIG. 5 illustrates another longitudinal view of an embodiment;

FIG. 6 illustrates a cross sectional view of a preferred embodiment;

FIG. 7 illustrates another cross sectional view preferred embodiment;

FIG. 8 is a flow chart of the an extrusion process; and

FIG. 9 is a flow chart of another preferred extrusion process.

## DETAILED DESCRIPTION OF THE INVENTION

### I. Definitions

Unless defined otherwise, technical and scientific terms used herein have the same meaning as commonly understood by one of ordinary skill in the art to which this invention belongs. For purposes of the present invention, the following terms are defined below.

As used herein, the use of the word "a" or "an" when used in conjunction with the term "comprising" in the claims and/or the specification may mean "one," but it is also consistent with the meaning of "one or more," "at least one," and "one or more than one." Still further, the terms " having," "including," "containing" and "comprising" are interchangeable and one of skill in the art is cognizant that these terms are open ended terms.

As used herein, the term "water activity" is a measurement of the energy status of the water in a system;

represented by a quotient between water's partial pressure in the food and pure water's partial pressure. It indicates how tightly water is bound, structurally or chemically, within a substance. This is measured by equilibrating the liquid phase (in the sample) with the vapor phase (in the headspace) and measuring the relative humidity of that space. Moisture is a quantitative analysis to determine the total amount of water present in a sample.

As used herein, the term "nutritionally complete" refers to a food that is a nutritionally adequate feed for animals other than man, that can be fed as a sole ration and is capable of sustaining life without additional food (aside from water).

As used herein, animal is defined as a non-human animal, preferably a companion animal, and most preferably, dogs, cats and horses.

As used herein, the term "gelatinized starch" or "starch gelatinization" refers to a starch that has been processed in the presence of water such that its granular structure has been destroyed and that the crystalline regions of the starch have been melted. The degree of gelatinization of the starch affects the texture, lasting time and digestibility of the chew. Starch gelatinization refers to the ratio of amount of cooked starch to the amount of total starch in the product.

As used herein, the term "highly soluble protein" refers to proteins that are capable of film formation, hydrophobic bonding and interfacial adsorption. Examples of such proteins include, but are not limited to as milk proteins (e.g., caseins, whey proteins) and egg white.

### II. Pet Chew Composition

The present invention is directed to an edible pet chew which may comprise a combination of protein, carbohydrate, fat, humectants and water which is formed by mixing and cooking, by extrusion, co-extrusion or injection molding for example, followed by a forming process, such as molding.

### A. Attributes, Texture, Hardness of Pet Chew

The pet chew of the present invention can be formed as a single component or at least a two component product. The at least two components can differ in caloric density, texture, composition, color, and ratio of an inner component to an outer component. Yet further, the at least two components can have the same coloring, similar texture, similar composition, etc. Additionally, color can be used to distinguish the inner from the outer component. In one preferred embodiment one of the at least two components has one of a caloric density, hardness, brittleness, toughness, elasticity, density, calories per gram that is at least 2% greater than another of the at least two components. More preferably it is at least 2% greater, even more preferably 6% greater, even more preferably 10% greater, even more preferably 15% greater and most preferably 20% greater.

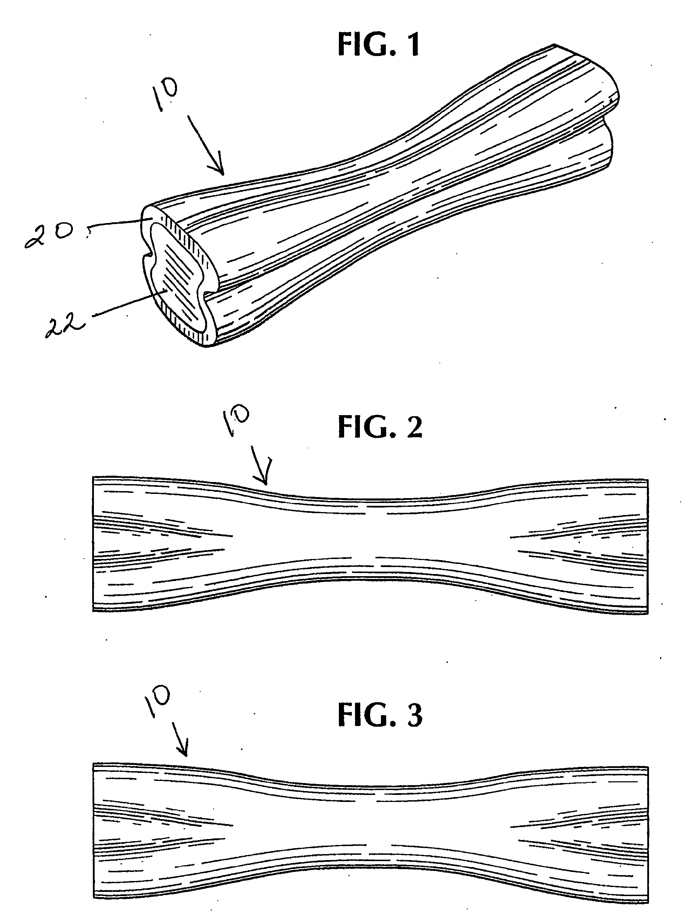

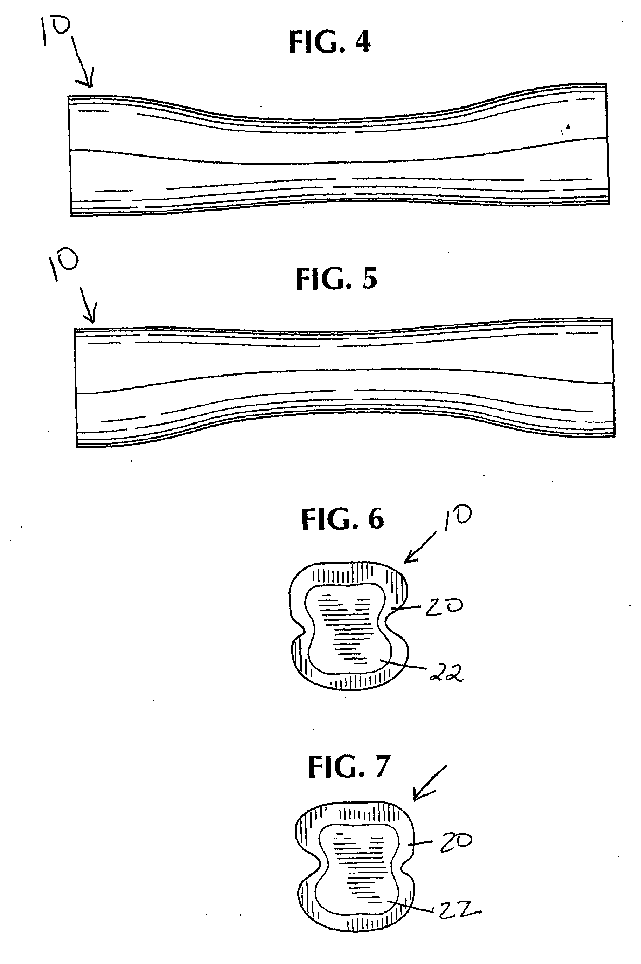

One embodiment of the present invention is a product formed as one or two components. If the produce comprises two components, then one component can surround the other component partially or entirely. Whether the pet chew is a mono-component or multiple component pet chew, the cross sectional shape is preferably a distorted rectangle or square or circle in which a first side and a second side are concave and the third side convex. An example of this embodiment is illustrated in FIG. 1- FIG. 7. More specifically, FIG. 1, FIG. 6 and FIG. 7, illustrates and embodiment in which the pet chew 10 comprises an outer layer 20, inner layer 22.

One layer may be a relatively light density inner layer 22 enclosed by a smooth, dense outer layer 20. In one embodiment, the two components can be distinguished by color in which the inner component may be a lighter color than the outer component further accentuating the textural differences. After shape formation, ropes of bones may be coated with a special mixture that may give an attractive shiny color in addition to potentially providing taste and/or aroma.

Another embodiment may be in the form of a single or at least two component in shapes resembling bone pieces of different cross sections such as distorted square, triangle, rectangle, star, circle, ellipse, and cross as well as un-distorted versions of these shapes or their combinations. For example, while the outer component may resemble a distorted rectangle, inside may be a regular or distorted star or a circle or other shape. Examples of bone-like shaped pet chews are illustrated in FIG. 1-FIG. 7.

Further differentiation may be achieved by expanding the product inside by exposing the product to cold forming wheels with cold water or glycol circulating inside the wheels. While the outer parts of the products cools and gets denser due to cooling affect from the liquids circulating inside the wheels, the hot inner component will expand creating a dual texture perception despite a singe component.

The pet chew may comprise two layers in which the relative weight ratios of the two layers are about 5:95% to about 95:5%, more preferably, about 35-40:65-60%. It is envisioned that the present invention may comprise multiple components and/or layers for example, at least three layers, at least four layers, at least 5 layers, at least 6 layers, at least 7 layers, at least 10 layers, at least 15 layers, and any range there between.

Regardless if the pet chew is a mono-component or multi-component, the size of the pet chew may be such that the pet chew is large enough to provide a substantial mass for a given weight of an animal. The pet chew comprises a density of about 0.9 to about 1.5 $g/cm^3$, preferably, about 1.2 to about 1.4 $g/cm^3$. The weight ratios for the pet chew (g pet chew/kg of animal) are about 1 g/kg to about 40 g/kg, preferably, about 2.5 g/kg to about 30 g/kg, and more preferably, about 4.5 g/kg to about 20 g/kg.

Still further, in a preferred embodiment, the pet food product of the present invention may be provided in different sizes for different sized dogs. For example small, and large sizes may be provided. The weight of the pet food product is in a range of about 20 to 450 grams per piece, preferably 100 to 400 grams per piece and most preferably 125 to 350 grams per piece. In a preferred embodiment, a small size product would weigh about 130 grams and a large size would weigh about 340 grams. Weight of the product per unit length may range from 14.1 to 21.4 gram/cm bone length of large (340g) and 8.7 to 11.5 gram/cm bone length for small (130g).

In certain embodiments, the pet chew may be produced in several sizes for example, about 340 grams with an approximate length of 200 millimeters, width of an approximate 45 mm, height of an approximate 49 mm and a waist diameter of about 32 mm; and about 130 grams with an approximate length of 150 millimeters, width of approximate 38 mm, height of approximate 40, and waist diameter of approximate 26 mm. Dimensions within the given ranges are also encompassed by the present invention. The length, which is the longest dimension on the product, is greater than 5.0 cm, a preferred range is 5 to 30 cm, a more preferred range is 8 to 25 cm, and a most preferred range is 15 to 21 cm. The width, which is a dimension parallel to base is in a range of 1 to 7 cm, a preferred range is 2 to 6 cm, a most preferred range is 3.0 to 5.5 cm. The height, which is perpendicular to the base is in a range of 1.0 to 8.0 cm, a preferred range is 2 to 6 cm, and a most preferred range is 3.0 to 5.5 cm. The average cross sectional areas range from 6.8 to 13.7 cm$^2$ in which the average is calculated by considering the arithmetic averages of cross sectional areas along the bone length. For a small bone the cross sectional areas may range from 4.52 cm$^2$ at the waist (smallest area) to 8.61 cm$^2$ at the bone end. For a large product the cross sectional areas may range from 7.96 cm$^2$ at the waist (smallest area) to 20.7 cm$^2$ at the bone end (largest area). The ratio of the largest (end) to smallest (waist) areas for the small product is 1.90 and that of large is 2.60.

**Table 1**

| | Average Cross Sectional Area (mm$^2$) | Ratio of largest to smallest areas (end/waist) | Product Weight/ Length (g/mm) | Calorie per Bone (kcal/bone) | Caloric density (kcal/gram) |
|---|---|---|---|---|---|
| **Large** | 1369.4 | 1.90 | 1.41-2.14 | 1088-1224 | 3.2-3.6 |
| **Small** | 678.3 | 2.60 | 0.87-1.15 | 416-468 | 3.2-3.6 |

Further embodiments of the present invention comprises various total weights of pet chews for example, but not limited to a total weight of about 125 g to about 160 g, more preferably, 130g, and a total weight of about 330 g to about 350 g, preferably, 340 g.

Specific composition of a product affects its textural attributes and thus the present invention possess specific textural qualities that can be defined as hardness, elasticity and toughness. The values of hardness, elasticity and toughness were determined using a TA.HDi Texture Analyzer (Texture Technologies Corp., Scarsdale, New York) equipped with a 500 kg load cell. A triple point bend rig, such as the TA.HDi, provided by the Texture Technologies, was used to measure force versus distance. This test was selected because it resembles the biting and chewing of the test samples by dogs. The samples are tested as they are without any modification by positioning on the test rig such that the knife will contact the narrowest point of the sample (middle of waist section) at a direction of a 90° angle while the sample is laying on its width.

The tests may be conducted at a room temperature of 25 Celsius on samples that are at least a day old. One of skill in the art realizes that the results from these tests will vary depending upon the conditions upon which the tests are preformed. Such conditions that may be altered include the temperature conditions and/or the age of the sample. For example, if the sample is 1 week old, 2 weeks old, three weeks old, one month old, two months old, or 6 months olds, the sample hardness increases with time. More preferably, the pet chew is tested one day after production through about four months. Thus, depending upon the age of the sample, those of skill in the art are aware that the hardness increases as a factor of time.

The samples to be tested were about 14-21 cm in length, 3.1-5.0 cm in height, about 3.4-5.3 cm in width depending on the product size. The distance between the test rig support beams 1 and 2 can be about 14.0 cm for the small samples and about 19.0 cm for the large samples. Before the test, the texture analyzer and the probe can be calibrated according to the instructions given in the instrument manual.

During the test, the probe or knife runs at a pre-test speed of 2.0 mm/s (speed of probe before contacting sampling); a test speed of 1.0 mm/s (speed of probe while traveling within the sample); a post test speed of 2.0 mm/s (speed that the probe is withdrawn from the sample); and for 50% compression (compression that probe implements on the product at the point of contact until it is withdrawn). This compression translates to about half of the product distance as detected by the instrument automatically. The force in kg (y-axis) is plotted against distance in mm (x-axis).

Data can be collected using the Texture Expert software (version 2.12) from Texture Technologies Corp. For each of these parameters, the result is the average of the values of at least three samples that are tested.

The Max Force (kg) is defined as the maximum amount of force needed to overcome the product's hardness. Usually a hard product will be associated with high ordinate (y -axis) values. The expressed "Force" unit derives from a direct association with mass weight in kg.

Travel (mm) is measured by the distance until the maximum force is reached and is indicative of the product elasticity.

Area (kg*mm) under the curve is defined as an estimate of work; and therefore calculated as an indication of the toughness of the product. The area shows the "force" or load that must be applied to the product to cause it to break. Thus, toughness is expressed as kg (force as indicated on the y-axis) * mm (distance traveled as indicated on the x-axis).

Thus, in certain embodiments, the pet chew comprises a hardness measurement of about 5 kg to about 60 kg, preferably about 10 kg to about 50 kg and most preferably about 15 kg to about 45 kg and elasticity measurement of about 3 mm to about 40 mm, preferably about 5 mm to about 30 mm and most preferably about 10 mm to 20 mm The pet chew may also have a toughness measurement of about 200 kg*mm to about 900 kg*mm, preferably about 250 kg*mm to about 750 kg*mm and most preferably about 300 kg*mm to about 600 kg*mm.

## B. Macronutrients

It is envisioned in certain embodiments that the pet chew is nutritionally complete. Pet snacks and treats are usually fed in addition to main meals and may not meet the recommended nutritional requirements for a number of reasons, such as missing one or more of the required nutrients, not providing the correct level of all of these nutrients and/or not providing enough calories to meet the animal's caloric requirements using the recommended serving size. The pet chew of the present invention is formulated to provide the daily nutritional and caloric requirements of a dog.

The formulation of the pet chew with regards to macronutrients may contain plant and animal derived proteins, fats and flours. It is specially designed to facilitate forming during molding in addition to creating a composite product with distinct chemical and physical properties.

The pet chew of the present invention comprises several macronutrients, for example, protein, carbohydrate, humectants, and water. Other macronutrients and/or micronutrients, such as vitamins may also be added to the pet chew. Additional ingredients in the inventive pet food may include natural and artificial antioxidants, e.g., butylated hydroxyanisole (BHA) and butylated hydroxytoluene (BHT), to retard the oxidation process that can result in rancid product. Mold inhibitors, for example, but not limiting to potassium sorbate, can be added to prevent and/or retard the growth of yeasts and molds that result in product spoilage. Ingredients that control water activity can also be included, for example, glycerine and propylene glycol, which also help reduce the risk of microbiological spoilage Texture modifiers, such as cellulose, can also be added. By altering the levels of the texture modifier, the textural characteristics of the product can be effected. Vitamin and mineral preblends provide correct levels of vitamins and minerals that are required for a balanced daily diet.

The total protein levels contained in the pet chew may comprise, measured weight to weight (w/w), about 5% to about 50%, about 10% to about 45%, about 5% to about 35%; or any range there between.

The protein can be any protein derived from plants, animals, and/or fungi. Exemplary proteins include, but are not limited to wheat gluten, corn zein, corn gluten, sunflower protein, legume protein, soy protein, pea protein, peanut protein, rapeseed, protein, nut protein (e.g., hazelnut, almond, pistachio protein), milk protein (e.g., casein or whey protein), collagen gelatin, keratin, egg albumin, or mycoprotein.

In certain embodiments, the protein component comprises "highly soluble" proteins to alter the texture of the pet chew. Examples of the proteins include milk proteins, for example caseins and whey proteins.

Thus, in further embodiments, the protein may comprise a milk protein, for example a casein protein (e.g., sodium caseinate, calcium caseinate, potassium caseinate) or a whey protein, which comprises in the range of about 1 to about 30%; about 3% to about 25%; about 5% to about 20%; or any range there between.

In certain embodiments, the proteins used in the pet chew of the present invention are capable of creating hydrophobic bonding and disulfide cross-linking which result in the desired elasticity of the present invention. Examples of such proteins are proteins that are rich in prolamines, for example, but not limited to wheat gluten, corn zein and soy protein. Proteins rich in prolamines are practically insoluble in water and absolute ethanol but can be dissolved in water-ethanol mixtures.

Thus, in certain embodiments, the protein component may comprise about 1% to about 30%, about 3% to about 25%, about 8% to about 20%, or any range there between of a protein that is rich in prolamines, for example, but not limited to wheat gluten, corn zein or soy protein. The protein component may comprise a casein or whey protein in combination with a protein that is rich in prolamines.

In certain embodiments, the pet chew may comprise carbohydrate in the amount of about 20% to about 80%;

about 25% to about 70%, about 30% to about 65%, or any range there between.

Still further, the carbohydrate may comprise a starch in the amount of about 20% to about 80%, preferably, about 25 to about 70% and more preferably about 30 to about 65% or any range there between. Example starches include, but are not limited to native and modified versions of tapioca, sorghum, potato, sweet potato, wheat, rice, corn, rye, barley, or corn starch. Preferably the starch is derived from a tuber such as potato or tapioca. Most preferably the starch is a tapioca starch.

The carbohydrate may also comprise a flour in the amount of preferably about 0.5 to about 40 %, more preferably about 5% to about 30% and even more preferably about 8% to about 20% or any range there between. Exemplary flours include, but are not limited to rice flour, wheat flour, tapioca flour, potato flour, corn flour, soy flour or lentil flour.

In certain embodiments, the pet chew may comprise a degree of gelatinization greater than 30% on total starch basis. Thus, the degree of starch gelatinization is preferably about 30 to about 100%, more preferably about 45% to about 100% and even more preferably about 70 to about 100%. The degree of gelatinization of the starch affects the lasting time of the chew.

In further embodiments, the amount of humectant in the pet chew comprises about 5% to about 50%; about 10% to about 45%, about 15% to about 35%, or any range there between. Exemplary humectants include, but are not limited to sucrose, sodium chloride, sorbitol, glycerine, starch hydrolysate, glucose, starch, maltose, lactose, gums, galactose, citric acid, alanine, glycine, high frutose corn syrup, tartaric acid, malic acid, xylose, PEG 400, PEG 600, propylene glycol, aminobutyric acid, mannitol, mannose, or lactulose.

More particularly, the humectant comprises a combination of propylene glycol, glycerin, and starch hydrolysate, wherein the amount of propylene glycol is less than about 10%, more preferably is less than about 4%, and even more preferably is less than about 3%. Propylene glycol binds to water in the produce to thereby reduce the water activity Propylene glycol also retards microbial growth.

Still further, the pet chew may also comprise a dietary fiber in the range of preferably about 0.5% to about 15% (w/w), more preferably about 3% to about 10% and even more preferably about 5% to about 8% or any range there between. Exemplary dietary fiber sources include, but are not limited to cell wall polysaccharides (cellulose, hemicelluloses, pectins) and non-cell wall polysaccharides (guar, locust bean gums, gum arabic, gum karaya, tragacanth gums, agar, alginates and carrageenan.

The amount of fat contained in the pet chew may comprise preferably about 1.0 % to about 20%, more preferably about 3% to about 15%, and even more preferably about 4% to 9%, or any range there between. Such fat sources include, but are not limited to corn, soybean, cottonseed, peanut, grapeseed, sunflower, olive oils, tallow, lard, shortening and butter and combinations thereof.

The amount of water in the pet chew may comprise preferably about 5 to about 30%, more preferably about 10% to about 25%, and even more preferably about 10% to about 20%, or any range there between. More particularly, the water activity (Aw) is of about 0.50 to about 0.85, more preferably about 0.60 to about 0.80, and even more preferably about 0.60 to about 0.75.

The pet chew of the present invention can be mono-component or a single component or single layer. However, in preferred embodiments of the present invention, as shown in FIG. 1, FIG. 6 and FIG. 7, the pet chew comprises more than one component or more than one layer. For example, the pet chew may comprise at least two layers. The amount of individual macronutrients in each layer can be similar in all the layers or the amounts may vary to alter the texture.

Referring to FIG. 1, FIG. 6, and FIG. 7, item 20 is a first layer, in which the protein amount may comprise about 5% to about 50%, preferably about 10% to about 45%, more preferably about 15% to about 35%. The fat amount may comprise about 1 % to about 20%. preferably 3% to about 15%, more preferably 3% to about 10%. The carbohydrate amount may comprise about 5% to about 95%, preferably about 35% to about 85%, more preferably about 55% to about 85%. The humectant amount may comprise about 5% to about 50%, preferably about 7% to about 40%, more preferably about 9% to about 25%. The moisture amount or water amount may comprise about 5% to about 35%, preferably about 8% to about 30%, more preferably about 10% to about 25%.

Referring to FIG. 1, FIG. 6, and FIG. 7, item 22 is a second layer, in which the protein amount may comprise about 5% to about 50%, preferably about 10% to about 40%, more preferably about 15% to about 30%. The fat amount may comprise about 1% to about 25%, preferably 3% to about 20%, more preferably 3% to about 15%. The carbohydrate amount may comprise about 20% to about 80%, preferably about 30% to about 70%, more preferably about 35% to about 65%. The humectant amount may comprise about 5% to about 40%, preferably about 10% to about 35%, more preferably about 15% to about 25%. The moisture amount or water amount may comprise about 5% to about 30%, preferably about 8% to about 25%, more preferably about 10% to about 20%.

Within the protein component of each layer, the amount of prolamine rich proteins can be altered to effect the elasticity of the layer, for instance, in preferred embodiments, the amount of prolamine rich proteins of the first layer comprises about 1% to about 30%, preferably about 5% to about 25%, and more preferably about 5% to about 20% while the second layer comprises about 1% to about 20%, preferably about 3% to about 15%, and more preferably about 5% to about 15% of prolamine rich proteins. Amount of highly soluble proteins can be altered to effect the hardness.

For instance, in preferred embodiments, the amount of soluble proteins in the first layer may comprise about 1 to about 30%, preferably, about 3 to about 20%, more preferably about 5% to about 15%, while the second layer comprises about 1% to about 35%, preferably about 3% to about 25%, more preferably about 5% to about 15%.

Those of skill in the art are aware that the present invention is not bound to the first layer being the outer layer and the second layer being the inner layer, these layers can be reversed depending upon the desire of the textural attributes of the pet chew.

Those of skill in the art are aware that the present invention is not limited to the aforementioned compositions. Thus, the pet chew of the present invention encompasses single, dual or any multi-layer pet chew having the above described structural and textural attributes, which are produced by the above identified macronutrients.

## C. Digestibility of the Pet Chew

Digestibility is a measure of a food's nutritional value. Digestibility analysis can be performed using protocols for determination of metabolizable energy of dog food.

Digestion testing addresses two important factors in the nutritional value of a food: the amount of nutrients in the product and the availability of those nutrients for the animal's use. The nutrient level together with the digestibility determine the actual amount of the nutrient the animal uses.

Typically, digestion studies involve an adjustment period during which the diet is fed and animals become accustomed to it. This is followed by a collection period during which time, the following information is obtained: total amount of food consumed; assay of the food for specific nutrients; total amount of fecal material; and assay of the fecal material for the same nutrients as measured in the food. Thus, the digestibility of a nutrient is calculated by subtracting the amount of the nutrient found in the stool from the total amount of the nutrient the animal consumed. The results of the analyses on the feces and the test product are then used to calculate dry matter, protein, caloric digestibility and metabolizable energy. The following equations can be used in the calculations of these values.

**Dry Matter (Total) Digestibility:**

$$[\{(\text{Total food consumed})*(\%\text{Dry matter of food})\}-\{(\text{Total weight of stool})*(\%\text{Dry matter of stool})\}] \div \{(\text{Total food consumed})*(\%\text{ Dry matter of food})\}$$

**Protein Digestibility:**

$$[\{(\text{Total food consumed})*(\%\text{Protein of food})\}-\{(\text{Total weight of stool})*(\%\text{Protein of stool})\}] \div \{(\text{Total food consumed})*(\%\text{ Protein of food})\}$$

**Fat Digestibility:**

$$[\{(\text{Total food consumed})*(\%\text{Fat of food})\}-\{(\text{Total weight of stool})*(\%\text{Fat of stool})\}] \div \{(\text{Total food consumed})*(\%\text{ Fat of food})\}$$

**Caloric Digestibility:**

$$[\{(\text{Total food consumed})*(\text{Gross energy per gram of diet})\} - \{(\text{Total weight of stool})*(\text{Gross energy per gram of stool})\}] \div \{(\text{Total food consumed})*(\text{Gross energy per gram of diet})\}$$

**Metabolizable Energy (M.E.):**

$$\{(\text{Gross energy of diet}) - (\text{Gross energy of stool})\} - (\text{Grams protein digested} *1.25\text{kcal/gram})\} \div \text{Amount of food consumed}$$

**Nitrogen-free Extract (NFE):**

$$100 - (\% \text{ crude protein} + \% \text{ crude fat} + \% \text{ crude fiber} + \% \text{ moisture} + \% \text{ ash})$$

**Modified Atwater M.E. (kcal/kg):**

$$10* \{(3.5 * \text{Crude protein}) + (8.5*\text{Crude fat}) + (3.5*\text{NFE})\}$$

**Gross Energy (kcal/g):**

$$\{(5.65 * \text{Crude protein}) + (4.15*\text{NFE}) + (9.4*\text{Crude fat})\} \div 100$$

In certain embodiments of the present invention, the pet chew may comprise an overall digestibility of greater than 70%, preferably greater than 80%, more preferably greater than 85% More particularly, the digestibility of the macronutrients are as follows: Protein digestibility is greater than 90%, fat digestibility is greater than 90%, caloric digestibility is greater than about 90%.

**D. Coating**

The pet chew can be coated with a special aqueous solution of ethanol-com zein to give its appealing sheen.
The edible coating layer comprising about 10 to about 21 % (w/w) of corn zein, about 10 to about 70% (w/w) water and about 20 to 80% (w/w) alcohol (e.g., ethanol). In addition, the coating may comprise about 0.05 to about 5 % (w/w) food colorant, and about 0.5 to about 10 % (w/w) of natural or artificial flavor.
Coloring agents can be included in the compositions within the scope of the present invention to produce articles of a desired color. Suitable coloring agents may include but not limited to synthetic coloring agents and natural agents.

The synthetic coloring agents may include but not limited to azo dyes such as Amaranth, ponceau 4R, Tartrazine, Sunset Yellow, Indigo Carmine. Natural coloring agents may include but not limited to xanthophyll, chlorophyll, and metallic oxides, such as iron oxide. In preferred embodiments, the coloring agent is iron oxide or caramel color.

Natural and/or artificial flavors or any ingredient that produces or contains a flavor may be included.. Exemplary flavors may include, but are not limited to smoke, beef, chicken, chicken liver, pork, bacon, turkey, turkey liver, shrimp, crab, or fish.

### E. Product Feeding

Based on a 3.2 kcal/gram caloric density a 130 gram pet chew provides 416 kcal/bone and a 340 gram pet chew provides 1088 kcal/bone. Depending on the animal size and weight, consumption of a single pet chew will contribute significantly to daily caloric intake. For example, 18% daily intake, to about 36% to about 72% daily intake, to about 95% to about 190%.

In. still yet a further embodiment, the pet chew may be consumed in not less than 4 minutes by the pet. A distinguishing feature of the preferred embodiment is the amount of time it takes a dog to eat the product, defined herein as "lasting time". Dogs typically consume the small products in one of two ways. They can eat the small size product quickly with little or no chewing typically in seconds or they can graze on the food such as kibbles throughout the day (60 minutes or more). Because of the unique design of the present invention, specifically its texture, size, and caloric density, dogs are forced to chew the entire product in order to consume it.

In order to measure the lasting time, actual consumption time of the bones were recorded with a chronometer (or a watch) considering the time between start and finish of eating the product by a test dog. The arithmetic averages of the responses were taken as the average lasting time for each product size.

In certain embodiments, lasting time of the pet chew is about 4 to about 60 minutes, preferably lasting time range is 5 to 40 minutes, and most preferably 10 to 30 minutes. For the small size product, the average lasting time is about 15 minutes and that of large size product is 10 minutes.

### III. Manufacturing Process

The pet chew of the present invention can be processed by any conventional method, for example extrusion or injection molding. These processes can be modified to produce a single component or mono-component and/or a two component or dual component and/or a multi-component pet chew.

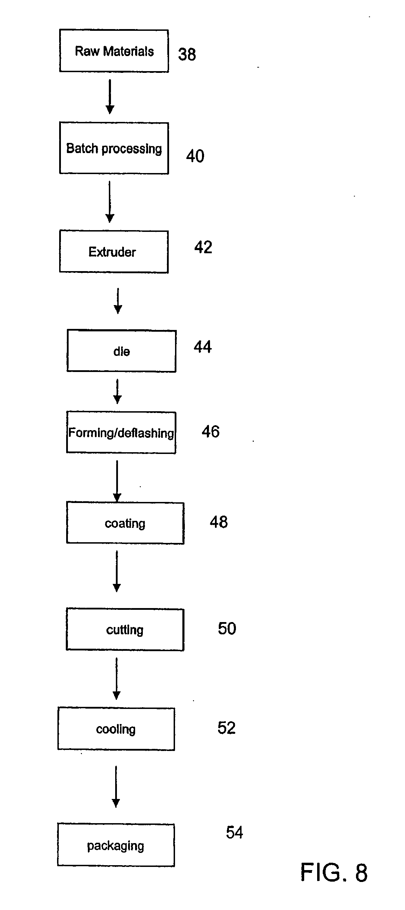

FIG. 8 illustrates a flow diagram of a basic extrusion process that can be used to manufacture the present invention. The process involves only one extruder (twin or single screw). The product comes out of the die, is conveyed to further processing including, but not limited to, forming, deflashing, coating, cutting, baking, retorting or irradiating. More specifically, the processing generally begins with placing the selected raw materials 38 through a blending, grinding and batching process 40. In this process, the raw materials are typically placed in a hopper. A pump pumps the contents of the hopper into a mixer where a variety of other ingredients may also be introduced. For example, it may be desirable to mix the starting ingredient with one or more of a coloring agent, flavoring agents, and one or more vitamins. The ingredients are combined in the mixer, which may include grinding of some of the raw materials, for a time period sufficient to adequately distribute all ingredients throughout the resultant mixture.

After the raw materials have been mixed and blended, the materials are ready for processing through an extruder 42. The material moves through the extruder 42 through a die 46 that preferably provides a specific texture on the outside surface of the present invention and through a forming head 48 that gives the inventive pet food product a specific shape. After exiting the forming head 48, the product can be alternatively processed in a deflashing compartment to remove excess material. Upon exiting the deflashing compartment, the pet chew proceeds into a coating compartment 48. Once the pet chew is coated, then it may be processed into a cutting chamber 50, then into a cooling chamber 52 before being packaged 54.

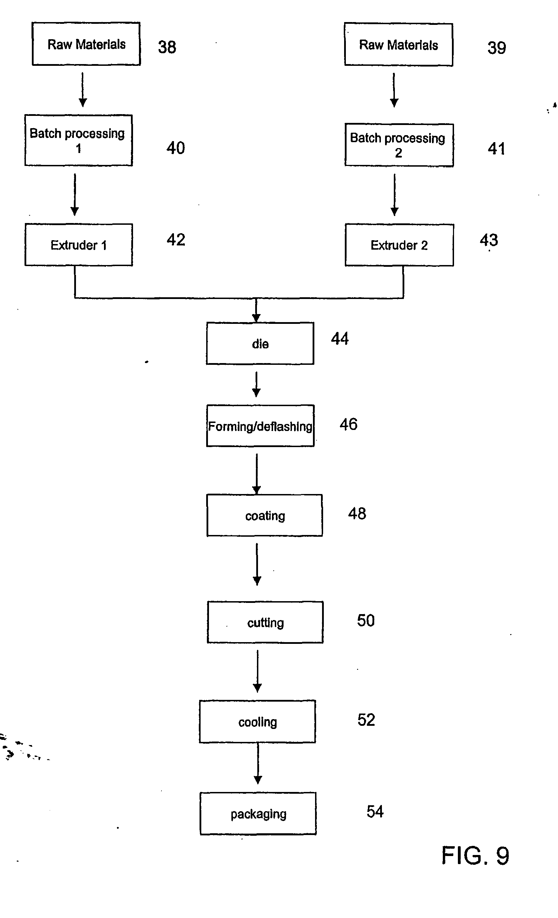

In a preferred embodiment, the extrusion process can be a co-extrusion process which involves two extruders (twin or single screw), as illustrated in FIG. 9. Flow streams coming from each extruder are converged into a common die with a specially designed opening. The product comes out of the die, is conveyed to further processing including, but not limited to, forming, deflashing, coating, cutting, baking, retorting or irradiating. The process steps are described with reference to an automated assembly line in a food processing facility. However, it should be understood that an automated assembly line is not necessary to practice the invention described herein, and that all or a subset of the steps may be performed in a non-automated manner. More specifically, the co-extrusion processing generally begins with placing the selected raw materials 38, 39 through a blending, grinding and batching process 40, 41. In this process the raw materials are typically placed in a hopper. A pump pumps the contents of the hopper into a mixer where a variety of other ingredients may also be introduced. For example, it may be desirable to mix the starting ingredient with one or more of a coloring agent, flavoring agents, and one or more vitamins. The ingredients are combined in the mixer, which may include grinding of some of the raw materials, for a time period sufficient to adequately distribute all ingredients throughout the resultant mixture. The blending, grinding and batching process 40, 41 may include at least one and preferably two separate blending, grinding and batching processes 40, 41 depending upon the ingredients of the inner and outer components. For example, if the ingredients of the inner and outer components are different, two separate blending, grinding and batching processes will be necessary.

After the raw materials have been mixed and blended, the materials are ready for processing through extruders 42, 43. The material moves through the extruders 42, 43 through a die 46 that preferably provides a specific texture on the outside surface of the present invention and through a forming head 48 that gives the inventive pet food product a specific shape. After exiting the forming head 48, the product can be alternatively processed in a deflashing compartment to remove excess material. Upon exiting the deflashing compartment, the pet chew proceeds into a coating compartment 48. Once the pet chew is coated, then it may be processed into a cutting chamber 50, then into a cooling chamber 52 before being packaged 54.

Thus, the pet chew may be a mono-extruded or co-extruded product requiring one or at least two extruders with similar or differing capabilities. The extruders may have varying barrel length and shapes. Sections of barrels can be modified to make feeding of powders and/or liquids in to the extruders possible. Barrel sections can also be modified to remove excess liquids under vacuum via vent stuffers before the extruder die exit. Removal of liquids may enable an operator to control liquids level in the finished product thus controlling product expansion, density and texture.

For the pet chew, initial product forming may start in the extrusion or co-extrusion die towards the exit of the die or the die nozzles. The extrusion or co-extrusion die is the location where product flows from the extruder(s) and may be combined into a composite rope. This combination may happen in various ways depending on the physical space limitations, product formulation, extent of product forming that takes place in the co-extrusion die, final product texture and shape. Cross-sectional area and length of die nozzles may depend on the product (and individual layer) formulations, product size, shape, relative ratios of individual layers of the composite rope and the requirements of the further processing (such as additional shaping). In the case of multiple layer pet chew products the relative weight ratios of the inner to the outer layers may range anywhere from 5:95 to 95:5%. For the pet chew, the preferred ratio of inner/outer is in the range 35-40:65-60%. Final breakdown of layer ratios affect final product texture especially if the layers have differing formulations.

In the case of more than two layers, additional layers may be incorporated between the inner and the outer layers in various ratios further enriching the shape, format and textural possibilities. As a result, cross-sectional areas of die nozzles may differ in shape and size depending on the product requirements.

Extrusion temperature is critical for monitoring and controlling the pet chew cooking process. The heating and cooling system must be capable of measuring and controlling the temperature of all sections of the extruder or injection molder excluding the infeed barrel which is desirable, however not required. Independent control of each section must be available. Temperature range for the cooking process may include but is not limited to about 40 Celsius to about 140 Celsius.

Product temperature for post-extrusion forming may comprise preferably about 40 Celsius to about 130 Celsius, more preferably about 80 Celsius to about 120 Celsius and most preferably about 90 Celsius to 110 Celsius.

Forming apparatus may comprise at least two wheels that may be temperature controlled internally or externally. Surface of these wheels may also be coated with a protective coating to prevent wear or to facilitate product release.

Overall product may be formulated to produce a product that may be nutritionally complete with required amounts of protein, fat, vitamins and minerals, moisture as well as carbohydrate. However, due to textural requirements outer layer may be formulated to contain more tapioca starch that may create a rather long and stringy texture upon gelatinization, and potentially protein especially wheat gluten to create a chewy texture. Since the outer layer may be enveloping the inner layer, and it may be the first point of contact during eating, it may be designed to have more structural integrity with potentially higher tapioca starch, sodium caseinate, wheat gluten and cellulose fiber percentages. The inner layer may be designed to have a softer and shorter texture with potentially higher flour and meal levels, and potentially lower levels of tapioca starch and wheat gluten, and sodium caseinate. The outer layer may be formulated to create a smooth outer appearance. The inner layer may be formulated to create a rough textured appearance.

More specifically, the outer layer may comprise about 15% to about 30% protein, 3% to about 15% fat, 35% to about 65% carbohydrate, about 15% to about 25% humectant, and about 10% to about 20% water. Of the protein component, about 20 to about 80% may comprise prolamine rich proteins, and about 20 to about 80 % may comprise highly soluble proteins, such as caseniates and gelatine.

The inner layer may comprise about 15% to about 30% protein, about 3% to about 15% fat, about 35% to about 65% carbohydrate, about 15% to about 25% humectant, and about 10% to about 20% water. Of the protein component, about 20 to about 80 % may comprise prolamine rich proteins, and about 20 to about 80 % may comprise highly soluble proteins, such as caseniates and gelatine.

The forming equipment delivers a flared bone-like shape to the pet chew product, as shown in FIG. 1-FIG. 5. Forming may be done by a rotary molder equipped with at least two wheels potentially followed by a deflasher to remove excess material squeezed between the wheels during shaping. The wheels on the rotary molder may have the contour volume of the desired pet chew product, machined into them. These wheels may be similar or different. For example, one of the wheels may have a specific name or a shape protruding from its base even though its matching pair may not have any such impressions. It is also possible that both wheels may have the same impression either a name or a shape therefore creating a product with the same imprint of name or shape. The wheels may have different impressions thus creating a product with a name on one side and a shape on the other.

The wheels may have variable speed along the length of the pet chew allowing the product to fill a potentially variable volume between the wheels.

During the forming operation a superfluous material is generated from the outer layer of the pet chew. This excess material or flash may be removed to deliver contour shapes. To remove the excess material, a deflashing unit may be utilized in the process. A deflashing unit can comprise of a series of cutting wheels may be utilized to remove excess flash. The deflasher may be designed to track with the formed profile of the pet chew product. The product of the present invention can be produced with or without the use of a deflashing unit.

A coating system may be placed after the de-flashing unit. The preferred system may consist of four atomizing spray nozzles to completely coat the product, one or more shroud/manifold for handling the over-spray and mist, one or more containment unit(s) for handling solvent vapors, and one or more controller unit(s) for programming the different spray changes in the operation. The atomizing spray system may be fabricated of stainless steel with sanitary flange connections. In addition to atomizing, the coat may be applied by spraying, enrobing, brushing, electrostatic coating, vapor deposition, surface printing, or surface painting.

Pet chew coating may be a supplemental unit operation designed for delivering a premium appearance via coloring and sheen. Forming may result in stretching and shearing effects along the contour of the pet chew product. Coating may reduce the impact of forming on the finished pet chew product appearance.

The coating solution may be applied on the pet chew product upon exiting the de-flasher. The pet chew product may go through the spraying chamber equipped with multiple nozzles. At this point, product temperature may be about 95Celsius, thus making rapid drying of the coating possible (approximately 10 seconds). For a good surface coverage, coating solution at about 0.5-1.0% of the total product weight may be applied on the pet chew product (wet coverage). Upon drying, about 50% of coating solution may evaporate from the product surface resulting in about 0.25-0.50% increase in weight of the finished pet chew product. In terms of pet chew surface area coverage upon drying, about 1.6-4.0 mg coating/cm$^2$ of bone surface may be present to ensure complete surface coverage.

Distance between the pet chew product to be coated and nozzles can be changed in addition to relative orientation of the nozzles with respect to pet chew product. Nozzles can be placed either at 90° (directly vertical with respect to the product) or at a smaller angle such as 45°.

Reducing the distance between the spray gun and the product allows reduction in the air fan pressure to achieve the same coverage and uniformity compared to longer distance with higher fan pressure.

### IV. Examples

The following examples are included to demonstrate preferred embodiments of the invention. It should be appreciated by those of skill in the art that the techniques disclosed in the examples which follow represent techniques discovered by the inventor to function well in the practice of the invention, and thus can be considered to constitute preferred modes for its practice. However, those of skill in the art should, in light of the present disclosure, appreciate that many changes can be made in the specific embodiments which are disclosed and still obtain a like or similar result without departing from the spirit and scope of the invention.

### EXAMPLE 1

One embodiment of the present invention is a pet chew product having a flared-like or bone-like shape (FIG. 1-FIG. 5). The pet chew product has outer and inner components 20, 22. An exemplary example of a recipe of ingredients is listed in Table 2.

**TABLE 2**

| Formulation Outer | % Inclusion | % of Total | Formulation Inner | % Inclusion | % of Total |
|---|---|---|---|---|---|
| Carbohydrate | 47.84 | 28.70 | Carbohydrate | 45.59 | 18.24 |
| Protein | 20.47 | 12.29 | Protein | 20.93 | 8.38 |
| Calcium Carbonate | 0.78 | 0.47 | Poultry meal | 5.58 | 2.23 |

(continued)

| Formulation Outer | % Inclusion | % of Total | Formulation Inner | % Inclusion | % of Total |
|---|---|---|---|---|---|
| Sodium tripolyphosphate | 1.16 | 0.70 | Flavor | 2.55 | 1.02 |
| Flavor | 1.14 | 0.68 | Dicalcium phosphate | 1.57 | 0.63 |
| Potassium Chloride | 1.11 | 0.66 | Vitamin & mineral mix | 2.36 | 0.94 |
| Vitamin & mineral mix | 2.55 | 1.53 | Calcium carbonate | 0.42 | 0.17 |
| Salt | 0.74 | 0.45 | Salt | 0.58 | 0.23 |
| Potassium Sorbate | 0.43 | 0.26 | Potassium sorbate | 0.39 | 0.16 |
| Color | 0.26 | 0.16 | Anti-caking agent | 0.31 | 0.13 |
| Water | 5.90 | 3.54 | Color | 0.191 | 0.074 |
| Liquid humectants | 15.8 | 9.48 | Water | 5.50 | 2.20 |
| Corn oil | 1.82 | 1.09 | Liquid humectants | 11.30 | 4.52 |
| **Total** | **100.00** | **60.00** | Corn oil | 2.70 | 1.08 |
| | | | **Total** | **100.00** | **40.00** |

One embodiment of the present invention is a coating layer. This coating may be applied to the pet chew described in Table 2. An exemplary example of a recipe of ingredients is listed in Table 3.

**Table 3. Coating Ingredients**

| Ingredients | Percent |
|---|---|
| Corn Zein (corn protein) | 10-21 % |
| Ethanol | 20-80% |
| Caramel powder (Color) | 0.05-5% |
| Flavor | 0.5-10% |
| Water | 10-70% |
| Total | 100.00 |

Table 4 illustrates textural attributes of the pet chew described in Example 1.

**Table 4. Textural Attributes**

| Textural Attributes | SuperChew | |
|---|---|---|
| | Small- | Large- |
| Hardness (Peak Force, kg) | 26 | 30 |
| Elasticity (Travel, mm) | 12 | 14 |
| Toughness (Area, kg*mm) | 289 | 389 |

Table 5 illustrates further qualities of the pet chew described in Example 1.

**Table 5. Digestibility analysis**

| | Mean | SEM |
|---|---|---|
| Dry Matter (Total) Digestibility | 87.9 | $\pm$0.30 |
| Protein Digestibility | 91.0 | $\pm$0.21 |
| Fat Digestibility | 92.1 | $\pm$0.54 |

(continued)

|  | Mean | SEM |
|---|---|---|
| Caloric Digestibility (Using Atwater calculation) | 94.9 | ±0.25 |
| Metabolizable Energy (M.E.) kcal/g (using Atwater calculation) | 3.23 | ±0.009 |
| Caloric Digestibility (Using Bomb calorimetry) | 91.6 | ±0.17 |
| Metabolizable Energy (M.E.) kcal/g (using Bomb calorimetry) | 3.06 | ±0.006 |

Although the present invention and its advantages have been described in detail, it should be understood that various changes, substitutions and alterations can be made herein without departing from the spirit and scope of the invention as defined by the appended claims. Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

**Claims**

1. A pet chew comprising about 5 to about 50 % (w/w) protein, about 20 to about 80 % (w/w) carbohydrate, about 5 to about 50 % (w/w) humectant, and about 5 to about 30 % (w/w) water, said pet chew when formed comprises a hardness measurement of about 5 kg to about 60 kg and an elasticity measurement of about 3 mm to about 40 mm.

2. The pet chew of claim 1, wherein said pet chew comprises a first and a second layer.

3. The pet chew of claim 1 or claim 2, wherein said pet chew comprises a toughness measurement of about 200 kg*mm to about 900 kg*mm.

4. The pet chew of any one of claims 1 to 3, wherein said pet chew comprises a degree of starch gelatinization greater than 30%.

5. The pet chew of any one of claims 1 to 4, further comprising an outer coating.

6. The pet chew of claim 5, wherein the outer coating comprises a solution of water, alcohol, corn zein and optionally a colorant, and a natural and/or artificial flavor.

7. The pet chew of any one of claims 1 to 6, wherein said pet chew comprises a digestibility of greater than 70%.

8. The pet chew of any one of claims 1 to 7, wherein said protein component is selected from the group consisting of wheat gluten, corn zein, corn gluten, sunflower protein, legume protein, soy protein, peat protein, peanut protein, rapeseed, protein, nut protein, milk protein, collagen gelatin, keratin, egg albumin, mycoprotein and combinations thereof.

9. The pet chew of any one of claims 2 to 8, wherein the protein component of the first layer comprises about 20 to about 80 % (w/w) of a protein rich in prolamines and about 20 to about 80 % (w/w) of a highly soluble protein.

10. The pet chew of any one of claims 2 to 9, wherein the protein component of the second layer comprises about 20 to about 80 % (w/w) of a protein rich in prolamines and about 20 to about 80 % (w/w) of a highly soluble protein.

11. The pet chew of any one of claims 1 to 10, wherein the carbohydrate component comprises one or more starch source selected from the group consisting of tapioca, sorghum, potato, sweet potato, wheat, rice, corn, rye, barley, and corn starch.

12. The pet chew of any one of claims 1 to 11, wherein said humectant is one or more selected from the group consisting of sucrose, sodium chloride, sorbitol, glycerine, hydrogenated starch hydrolysate, glucose, starch, maltose, lactose, gums, galactose, citric acid, alanine, glycine, high frutose corn syrup, tartaric acid, malic acid, xylose, PEG 400, PEG 600, propylene glycol, aminobutyric acid, mannitol, mannose, and lactulose.

13. The pet chew of claim 0, wherein said humectant is propylene glycol, glycerin, and hydrogenated starch hydrolysate.

14. The pet chew of claim 12 or claim 13, wherein propylene glycol comprises less than 10% (w/w) of the pet chew product.

15. An edible coating layer comprising about 10 to about 21 % (w/w) of corn zein, about 10 % to about 70% water and about 20% to about 80% alcohol.

16. The edible coating layer of claim 0, further comprising about 0.05 to about 5 % (w/w) food colorant, and about 0.5 to about 10 % (w/w) of natural and/or artificial flavor.

17. A process of manufacturing a dual layer pet chew comprising the steps of:

   mixing a first dry mixture comprising at least about 15 to about 35 % (w/w) protein and about 10 to about 55 % (w/w) starch;
   mixing a second dry mixture comprising at least about 15 to about 35 % (w/w) protein, about 10 to about 55 % (w/w) starch;
   adding to first dry mixture to from a first component about 5 to about 35 % (w/w) humectant and about 5 to about 30 % (w/w) water to form ;
   adding to second dry mixture to form a second component about 5 to about 35% (w/w) humectant, and about 5 to about 30 % (w/w) water;
   co-extruding the first composition within the second component to form a dual component extrudate; and
   forming a three dimensional shape of the dual component extrudate to form a dual layer pet chew.

18. The process of claim 17, wherein said co-extruding step comprises a heating process to form a gelatinized dual component extrudate.

19. The process of claim 17 or claim 18, wherein the forming step uses a rotary moulder having at least two wheels whereby the wheels have the contour volume of the pet chew machined into them.

20. The process of any one of claims 17 to 19, further comprising a coating step which comprises applying a coat solution to the pet chew.

21. The process of any one of claims 17 to 20 for manufacture of a pet chew as claimed in any one of claims 1 to 14.

**FIG. 1**

**FIG. 2**

**FIG. 3**

# FIG. 4

10

# FIG. 5

10

# FIG. 6

10

20

22

# FIG. 7

20

22

Raw Materials — 38

↓

Batch processing — 40

↓

Extruder — 42

↓

die — 44

↓

Forming/deflashing — 46

↓

coating — 48

↓

cutting — 50

↓

cooling — 52

↓

packaging — 54

FIG. 8

```
┌──────────────┐
│ Raw Materials│  38
└──────────────┘
        │
        ▼
┌──────────────┐
│Batch processing│ 40
│      1         │
└──────────────┘
        │
        ▼
┌──────────────┐
│  Extruder 1  │  42
└──────────────┘
```

```
┌──────────────┐
│ Raw Materials│  39
└──────────────┘
        │
        ▼
┌──────────────┐
│Batch processing│ 41
│      2         │
└──────────────┘
        │
        ▼
┌──────────────┐
│  Extruder 2  │  43
└──────────────┘
```

```
        ┌──────────┐
        │   die    │  44
        └──────────┘
             │
             ▼
        ┌──────────────────┐
        │Forming/deflashing│  46
        └──────────────────┘
             │
             ▼
        ┌──────────┐
        │  coating │  48
        └──────────┘
             │
             ▼
        ┌──────────┐
        │  cutting │  50
        └──────────┘
             │
             ▼
        ┌──────────┐
        │  cooling │  52
        └──────────┘
             │
             ▼
        ┌──────────┐
        │ packaging│  54
        └──────────┘
```

FIG. 9

**European Patent Office**

**EUROPEAN SEARCH REPORT**

Application Number

EP 06 25 0868

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/253342 A1 (TOWNSEND STEWART ET AL) 16 December 2004 (2004-12-16)<br><br>* figures 3,4,8,11,12 *<br>* paragraphs [0068] - [0077] *<br>* paragraphs [0094] - [0107] *<br>* paragraphs [0118] - [0120] * | 1-4, 7-14, 17-21 | INV.<br>A23K1/00<br>A23K1/18<br>A23J3/14 |
| Y |  | 5,6 |  |
| X | EP 0 585 688 A (EURO-CELTIQUE S.A) 9 March 1994 (1994-03-09) * page 6, lines 16-18 * * examples 1-9 * | 15,16 |  |
| X | US 4 822 626 A (SPANIER ET AL) 18 April 1989 (1989-04-18) * the whole document * | 1-5,7-14 |  |
| X | O'DONNELL P B ET AL: "Aqueous pseudolatex of zein for film coating of solid dosage forms" EUROPEAN JOURNAL OF PHARMACEUTICS AND BIOPHARMACEUTICS, ELSEVIER SCIENCE PUBLISHERS B.V., AMSTERDAM, NL, vol. 43, no. 1, January 1997 (1997-01), pages 83-89, XP004256862 ISSN: 0939-6411 * page 84, column 1, paragraph 3 * | 15,16 | **TECHNICAL FIELDS SEARCHED (IPC)**<br><br>A23K<br>A23J |
| X | US 5 182 130 A (HARALAMPU ET AL) 26 January 1993 (1993-01-26) * example D * | 15,16 |  |
|  | -/-- |  |  |

The present search report has been drawn up for all claims

| Place of search | Date of completion of the search | Examiner |
|---|---|---|
| The Hague | 11 April 2006 | Rooney, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 06 25 0868

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | DATABASE FSTA [Online] INTERNATIONAL FOOD INFORMATION SERVICE (IFIS), FRANkFURT-MAIN, DE; 1984, ANDRES C: "Natural edible coating has excellent moisture and grease barrier properties." XP002376494 Database accession no. 85-2-07-t0028 * abstract * & FOOD PROCESSING,, vol. 45, no. 13, 1984, page 48, USA 1984 ----- | 5,6 | |
| A | LAWTON ET AL: "Viscoelasticity of zein-starch doughs" CEREAL CHEMISTRY, AACC INTERNATIONAL, ST PAUL, MN, US, vol. 69, no. 4, 1992, pages 351-355, XP002132413 ISSN: 0009-0352 * the whole document * ----- | 1-21 | |
| A | US 5 894 029 A (BROWN ET AL) 13 April 1999 (1999-04-13) * the whole document * ----- | 1-21 | |

TECHNICAL FIELDS SEARCHED (IPC)

The present search report has been drawn up for all claims

| Place of search | Date of completion of the search | Examiner |
|---|---|---|
| The Hague | 11 April 2006 | Rooney, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 06 25 0868

This annex lists the patent family members relating to the patent documents cited in the above-mentioned European search report.
The members are as contained in the European Patent Office EDP file on
The European Patent Office is in no way liable for these particulars which are merely given for the purpose of information.

11-04-2006

| Patent document cited in search report | | Publication date | Patent family member(s) | | Publication date |
|---|---|---|---|---|---|
| US 2004253342 | A1 | 16-12-2004 | AU | 2003266003 A1 | 30-04-2004 |
| | | | EP | 1545238 A2 | 29-06-2005 |
| | | | JP | 2005538715 T | 22-12-2005 |
| | | | WO | 2004023885 A2 | 25-03-2004 |
| | | | US | 2004052906 A1 | 18-03-2004 |
| EP 0585688 | A | 09-03-1994 | AT | 172224 T | 15-10-1998 |
| | | | AU | 4462193 A | 17-02-1994 |
| | | | CA | 2103635 A1 | 14-02-1994 |
| | | | CN | 1086144 A | 04-05-1994 |
| | | | DE | 69321538 D1 | 19-11-1998 |
| | | | DE | 69321538 T2 | 06-05-1999 |
| | | | JP | 6172398 A | 21-06-1994 |
| | | | MX | 9304900 A1 | 30-06-1994 |
| | | | NO | 932867 A | 14-02-1994 |
| | | | PL | 300087 A1 | 18-04-1994 |
| | | | US | 5356467 A | 18-10-1994 |
| | | | US | 5324351 A | 28-06-1994 |
| | | | ZA | 9305869 A | 09-03-1994 |
| US 4822626 | A | 18-04-1989 | NONE | | |
| US 5182130 | A | 26-01-1993 | NONE | | |
| US 5894029 | A | 13-04-1999 | NONE | | |

EPO FORM P0459

For more details about this annex : see Official Journal of the European Patent Office, No. 12/82